# EUROPEAN PATENT SPECIFICATION

(11) **EP 3 107 010 B1**
(45) Date of publication and mention of the grant of the patent: **20.10.2021**
(21) Application number: 16166096.4
(22) Date of filing: 19.04.2016
(51) Int. Cl.: G06F 16/176, G06F 16/22, G06F 16/951, G06F 16/25

(54) **DATA INTEGRATION PIPELINE**
DATENINTEGRATIONSROHRLEITUNG
PIPELINE D'INTÉGRATION DE DONNÉES

(30) Priority: 22.04.2015 US 201514693792
(43) Date of publication of application: 21.12.2016
(73) Proprietor: Palantir Technologies Inc., Palo Alto, CA 94301 (US)
(72) Inventor: WILSON, Timothy, Palo Alto, CA 94301 (US); DORNE, Brian, Menlo Park, CA 94301 (US); LOCKFORT, Christopher, Palo Alto, CA 94301 (US); KLEINGARN, Thomas, Palo Alto, CA 94301 (US)
(74) Representative: Sayer, Robert David

(56) References cited:
- WO-A2-2005/022321
- US-A1- 2013 325 908
- Thomas Jörg ET AL: "Near Real-Time Data Warehousing Using State-of-the-Art ETL Tools 1 Near Real-Time Data Warehousing", , 28 August 2009 (2009-08-28), XP055317809, Retrieved from the Internet: URL:http://wwwlgis.informatik.uni-kl.de/cm s/fileadmin/users/joerg/documents/joergBIR TE09.pdf [retrieved on 2016-11-09]
- None

## Description

### TECHNICAL FIELD

The subject matter disclosed herein generally relates to machines configured to process data. Specifically, the present disclosure addresses machines and methods to facilitate the integration of raw data.

### BACKGROUND

A data integration pipeline facilitates the flow of data from a source to a destination endpoint, typically within a data processing system. A data pipeline therefore typically includes data integration components to enable the transmission and/or transformation of data within the data pipeline.

Data integration involves combining data residing in different sources and providing users with a unified view of these data. Data integration appears with increasing frequency as the volume and need to share existing data quickly explodes. For frequent updates of large amounts of data, a current solution is to refresh an entire database whenever large amounts of updates need to be ingested. This solution becomes increasingly inefficient as the volume of data increases, because data must be loaded, and reloaded multiple times.

WO2005/022321 discloses a method for personal data management using content-based replication.

### SUMMARY

The object of the invention is solved by the features of the independent claims. Further embodiments are the subject-matter of the dependent claims.

### BRIEF DESCRIPTION OF THE DRAWINGS

Some embodiments are illustrated by way of example and not limitation in the figures of the accompanying drawings.
FIG. 1 is a network diagram illustrating a network environment suitable for presenting and sharing search results as trip objects, according to some example embodiments.
FIG. 2 is a block diagram illustrating components of a data integration pipeline suitable to receive and integrate raw data into a data processing system, according to some example embodiments.
FIG. 3 is an interaction diagram illustrating various example interactions between the data integration pipeline, third party serves, and databases, according to some example embodiments.
FIG. 4 is a flowchart illustrating operations of the data integration pipeline in performing an improved method of receiving and integrating raw data, according to some example embodiments.
FIG. 5 is a flowchart illustrating further operations of the data integration pipeline in performing a method of receiving and integrating raw data, according to some example embodiments.
FIG. 6 is a flowchart illustrating further operations of the data integration pipeline in performing a method of receiving and integrating raw data, according to some example embodiments.
FIG. 7 is a flowchart illustrating operations of the data integration pipeline in integrating a plurality of objects fragments based on one or more defined import phases based on lock contention or optimization factors.
FIG. 8 is a block diagram illustrating components of a machine, according to some example embodiments, able to read instructions from a machine-readable medium and perform any one or more of the methodologies discussed herein.

### DETAILED DESCRIPTION

Example embodiments described herein pertain to a data integration pipeline (e.g., the data integration pipeline), configured to receive and integrate raw data into a data processing system. Examples merely typify possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

The data integration pipeline is configured (e.g., by one or more suitable modules that include one or more processors) to receive raw data from one or more data sources, and to integrate the raw data into a data processing system. Raw data is defined as an electronic collection of data composed of information from multiple records, whose primary relationship to each other is their shared origin from one or more databases. Raw data may, for example, include hundreds of millions of data objects, up to billions of data objects. In some example embodiments, the data integration pipeline is configured to receive files of the JavaScript Object Notation (JSON) file type, including raw JSON files, gzip JSON, as well as .ZIP files. JSON is an open standard format that uses human-readable text to transmit data objects consisting of attribute-value pairs, and is used primarily to transmit data between a server and web application. In integrating the raw data, the data integration pipeline splits the integration into two integration phases, namely: an ingest phase, and an import phase.

The ingest phase of integration includes receiving and parsing the raw data (e.g., a raw JSON file) into a set of objects comprising object fragments (e.g., including at least Access Control Lists (ACLs), data sources, media values, and link set fragments). The raw data includes corresponding tags identifying the object type. Data objects include a variety of structured and unstructured sources, including but not limited to: raw unstructured text documents, structured log-line data, structured data representations from other internal or external source systems that have shared relationships. The concept of ACLs is described in U.S. Patent No. 8,527,461, entitled "Cross-ACL Multi-master Replication," U.S. Patent No. 8,782,004, entitled "Cross-ACL Multi-master Replication," and U.S. Patent No. 8,838,538, entitled "Techniques For Replicating Changes To Access Control Lists On Investigative Analysis Data".

The data integration pipeline is configured to parse the raw data, and to assign a unique object tag to each of the data objects comprising the parsed data, where the object tag identifies its corresponding object (e.g., ACLs, data sources, media values, and link set fragments). To parse the data, the data integration pipeline takes input data (e.g., the raw data as a JSON file, GZIP JSON, or .ZIP) and builds a data structure (e.g., a parse tree, or abstract syntax tree) giving the raw data a structural representation, while checking for correct syntax in the process. The parsing may be preceded or followed by other steps, or these may be combined into a single operation step. For example, having parsed the raw data into a set of object fragments, the data integration pipeline may then deliver the parsed data to a server and store the object fragments within an object fragment table.

In some example embodiments, the data integration pipeline generates object pointers for each of the object fragments stored within the object fragment table. A pointer is a programming language object, whose value refers to (e.g., points to) another value stored elsewhere in the computer memory using its address. As an analogy, a page number in a book's index could be considered a pointer to the corresponding page. In this way, pointers are keys into the object fragment table, where given a collection of keys corresponding to object fragments in the object fragment table, just those corresponding objects can be retrieved without the need of sorting through the remainder of the table. Pointers to data thereby significantly improve performance for repetitive operations such as traversing strings, lookup tables, control tables, and tree structures.

Each object pointer includes location information (e.g., the address) of an object fragment from among the set of object fragments within the object fragment table. The data integration pipeline stores the object pointers in a pointer table. The object pointers may then be used during the import phase of integration to identify the locations of the one or more object fragments to be integrated.

In some example embodiments, the data integration pipeline is configured to difference the set of object fragments in the object fragment table against the objects in the object database in order to identify duplicative data. By identifying the duplicative data, the data integration pipeline may prevent duplicative data from being reloaded into the object database. For example, an ingest module is configured to difference the parsed raw data against data stored within an object database. Formally, a data differencing algorithm takes as input source data (e.g., the parsed raw data) and target data (e.g., an object database), and produces difference data such that given the source data and the difference data, one can reconstruct the target data. In differencing the parsed raw data to the data stored within the object database, the ingest module identifies and removes any duplicative data objects from the parsed data. This allows for new information to be stored, rather than retaining complete copies of redundant data. In addition, the differencing of the parsed data is more performant (e.g., faster computationally) compared to existing solutions. This concludes the ingest phase of data integration.

Responsive to the completion of the ingest phase, the import phase may begin. The import phase of data integration is responsible for applying the collated differences to new or previously imported data located within a data processing system. The import phase of the data integration process includes steps for passing through the pointer table and dereferencing the object pointers. Dereferencing a pointer refers to obtaining the datum referenced by the pointer. Thus, by dereferencing the object pointers, a value is retrieved, wherein the value represents the location information (e.g., the memory address) of the object fragment in the object fragment table. For example, the modules of the data integration pipeline pass through the pointer table and dereference the object pointers in order to obtain the location information of the object fragments in the object fragment database. With the dereferenced object pointers, the object fragments may be efficiently retrieved from the object fragment table in order to complete the integration of the raw data into the data processing system.

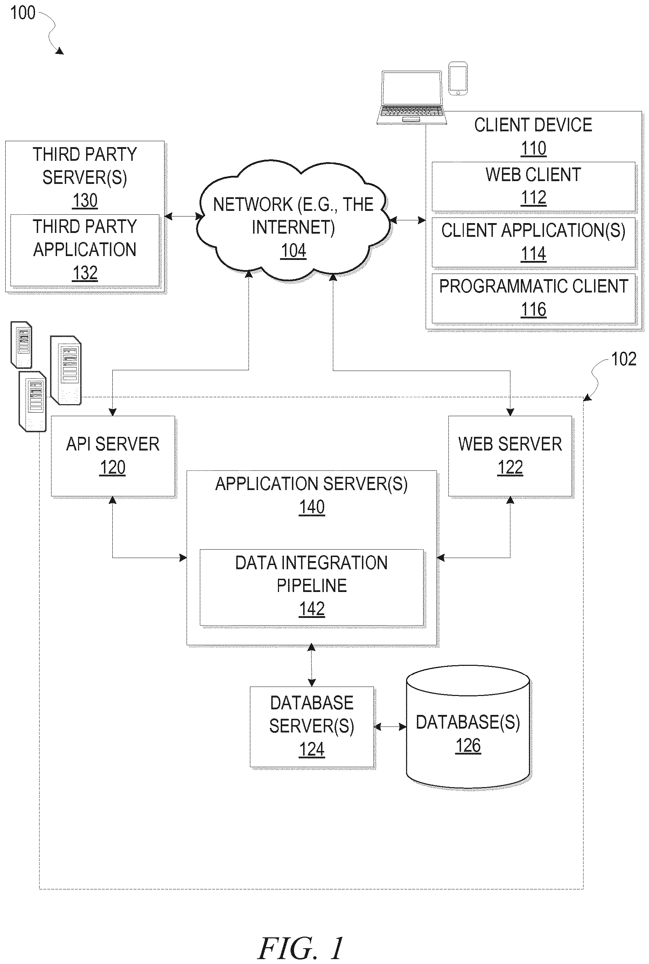

FIG. 1 is a network diagram illustrating a network environment 100 suitable for operating a data integration pipeline (e.g., the data integration pipeline 142), according to some example embodiments. A networked system 102, in the example form of a network-based publication system, provides server-side functionality, via a network 104 (e.g., an Intranet, the Internet or a Wide Area Network (WAN)), to one or more clients. FIG. 1 illustrates, for example, a web client 112 (e.g., a RESTful web client, a browser, such as the INTERNET EXPLORER® browser developed by MICROSOFT® Corporation of Redmond, Washington State), client applications 114, and a programmatic client 116 executing on respective client device 110.

An Application Program Interface (API) server 120 and a web server 122 are coupled to, and provide programmatic and web interfaces respectively to, one or more application servers 140. The application servers 140 host the data integration pipeline 142. The application servers 140 are, in turn, shown to be coupled to one or more database servers 124 that facilitate access to one or more databases 126.

The data integration pipeline 142 provides data retrieval and integration functions for the networked system 102. For example, the data integration pipeline 142 may be configured to retrieve raw data and integrate the raw data into a data processing system in two distinct integration phases. While the data integration pipeline 142 is shown in FIG. 1 to form part of the networked system 102, it will be appreciated that, in alternative embodiments, the data integration pipeline 142 may form part of a data pipeline that is separate and distinct from the networked system 102.

FIG. 1 also illustrates a third-party application 132, executing on a third-party server 130, as having programmatic access to the networked system 102 via the programmatic interface provided by the API server 120. For example, the third-party application 132 may, using information retrieved from the networked system 102, support one or more features or functions on a website hosted by a third party. The third party-server 130 may, for example, be a source of the raw data to be integrated into the data processing system.

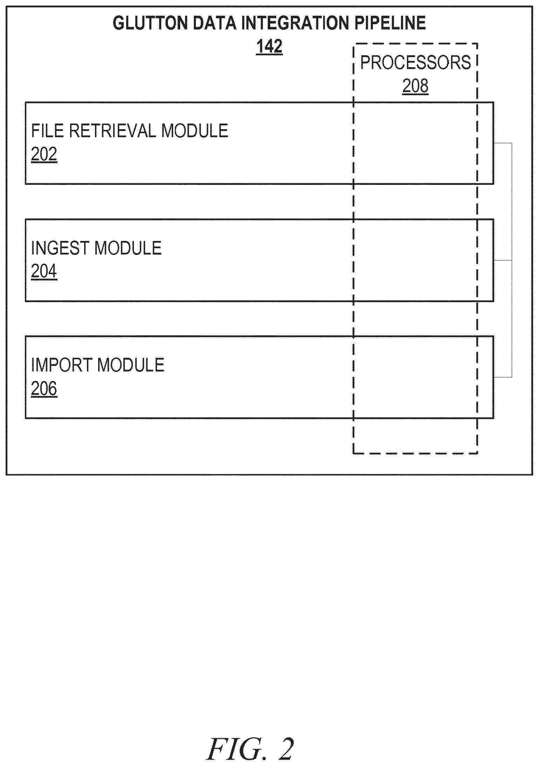

FIG. 2 is a block diagram illustrating components of a data integration pipeline 142 that configure the data integration pipeline 142 to receive raw data from one or more data sources, and integrate the raw data into a data processing system, according to some example embodiments. A data source is a name given to the connection set up to a database from a server. The name is commonly used when creating a query to a database. The data integration pipeline 142 is shown as including a file retrieval module 202, an ingest module 204, and an import module 206, each of which is configured and communicatively coupled to communicate with the other modules (e.g., via a bus, shared memory, or a switch). Any one or more of these modules may be implemented using one or more processors 208 and hence may include one or more of the processors 208 (e.g., by configuring such one or more processors to perform functions described for that module).

Raw data may be obtained via the file retrieval module 202, from one or more data sources, including the third party servers 130, and the databases 126. In such instances, the file retrieval module 202 may receive a request to retrieve raw data from a client device 110, through the network 104. For example, a user on client device 110 may submit a request to the file retrieval module 202. This request includes identifying a data source for the raw data, and an identifier corresponding to the raw data (e.g., file name). Responsive to receiving the request, and based on the identified data source and the identifier of the raw data, the file retrieval module 202 may commence integration of the raw data into the data integration pipeline 142. As stated above, the file retrieval module 202 may be configured to retrieve files of a specific file type, such as raw JSON files, GZIP JSON, and in some embodiments, .ZIP files for media.

After retrieving the raw data, the file retrieval module 202 may provide the raw data as raw data (e.g., a raw JSON file) to the ingest module 204. The ingest module 204 is configured to receive and parse the raw data to begin the ingest phase of data integration into a data processing system. In some example embodiment the ingest module 204 is configured to include a parser. A parser is a component that takes input data and builds a data structure (e.g., a parse tree, abstract syntax tree, a set, a record, an associative array, or an object). The ingest module 204 parses the raw data into a data structure comprising a plurality of object fragments.

Having parsed the raw data into a plurality of object fragments, the ingest module 204 differences the plurality of object fragments against an object database. As discussed above, to difference the sets of data, the ingest module 204 takes input source data (e.g., the plurality of object fragments) and differences it against target data (e.g., objects within the object database) to produce a difference such that given the source data and the difference, one can reconstruct the target data. The ingest module 204 retains and stores the difference, comprising a plurality of object fragments, and clears the duplicative data. In this way the ingest module 204 prevents duplicative data from integrating into a data processing system.

To facilitate efficient retrieval of the plurality of object fragments by the import module 206, the ingest module 204 generates object pointers corresponding to each of the plurality of object fragments comprising the difference. The object pointers include a value which is intended to be used as a key into a database table, such that the object pointer functions as a reference to datum stored within the database table. The ingest module 204 stores the object pointers within a pointer table.

The import module 206 is configured to facilitate the import phase of data integration, with the ultimate goal being to integrate the plurality of object fragments into a data processing system. The import module 206 accesses the pointer table to dereference the object pointers thereby retrieving the location information (e.g., memory addresses) of the plurality of object fragments.

Upon dereferencing the object pointers and retrieving the location information of the object fragments to be imported, the import module 206 may retrieve the object fragments and resolve the object fragments into an object database within a data processing system.

Any one or more of the modules described may be implemented using hardware alone (e.g., one or more of the processors 208 of a machine) or a combination of hardware and software. For example, any module described of the data integration pipeline 142 may physically include an arrangement of one or more of the processors 208 (e.g., a subset of or among the one or more processors of the machine) configured to perform the operations described herein for that module. As another example, any module of the data integration pipeline 142 may include software, hardware, or both, that configure an arrangement of one or more processors 208 (e.g., among the one or more processors of the machine) to perform the operations described herein for that module. Accordingly, different modules of the data integration pipeline 142 may include and configure different arrangements of such processors 208 or a single arrangement of such processors 208 at different points in time. Moreover, any two or more modules of the data integration pipeline 142 may be combined into a single module, and the functions described herein for a single module may be subdivided among multiple modules. Furthermore, according to various example embodiments, modules described herein as being implemented within a single machine, database, or device may be distributed across multiple machines, databases, or devices.

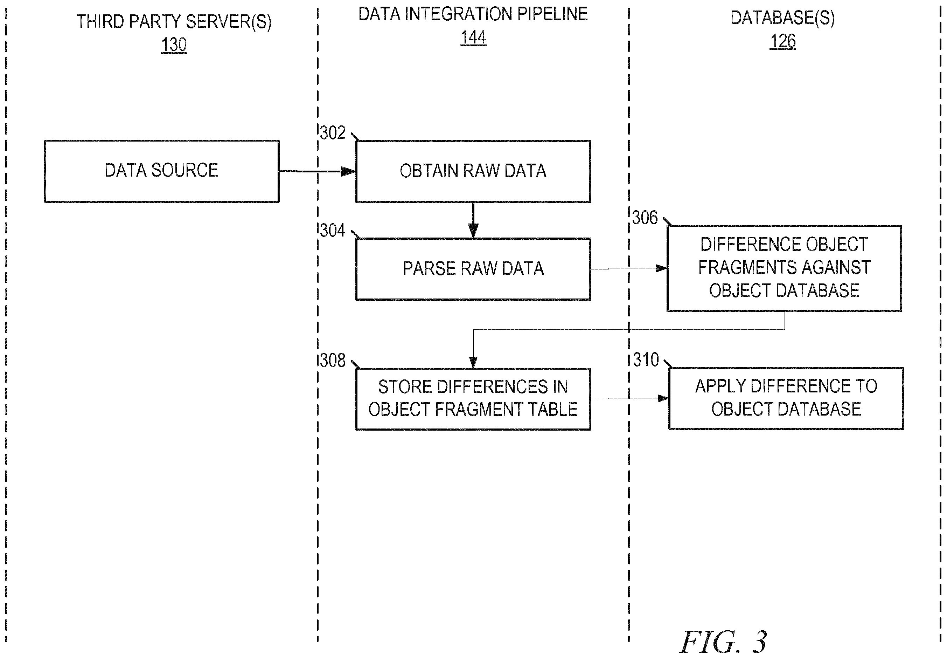

FIG. 3 is an interaction diagram depicting example exchanges between the data integration pipeline 142, third party servers 130, and databases 126, consistent with some example embodiments. At operation 302, raw data from the third party servers 130 is provided to the data integration pipeline 144. Upon obtaining the raw data, at operation 304, the data integration pipeline parses the raw data into a plurality of object fragments.

At operation 306, after parsing the raw data into a plurality of object fragments, the data integration pipeline 144 compares the object fragments against database 126 (e.g., an object database). At operation 308, the data integration pipeline 144 then retrieves the differences and stores the differences in an object fragment table. At operation 310, the various modules of the data integration pipeline 144 apply the differences to the database 126 (e.g., the object database).

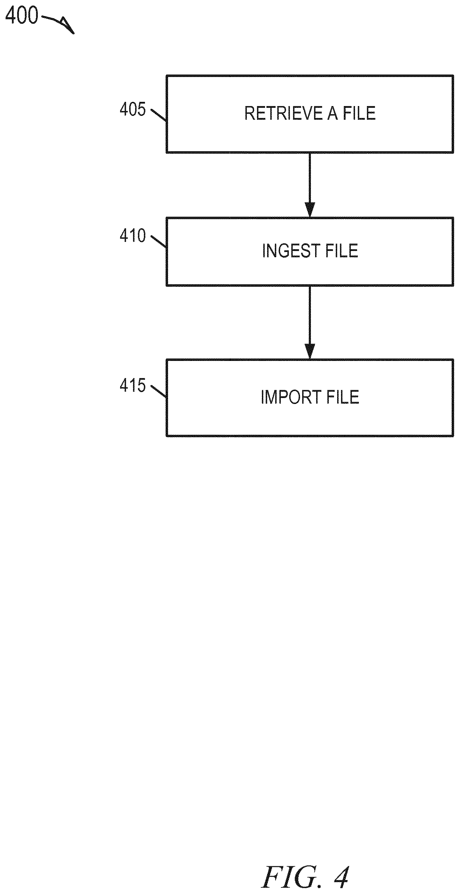

FIG. 4 is a flowchart illustrating operations of the data integration pipeline 142 in performing a method 400 of receiving raw data and integrating the raw data into a data processing system, according to some example embodiments. Operations of the method 400 may be performed by the modules described above with respect to FIG. 2.

At operation 405, the file retrieval module 202 obtains raw data to integrate into the data processing system. The raw data (e.g., raw JSON, GZIP JSON, or ZIP files) may be retrieved from multiple data sources, including the third party server 130 and/or the database 126. In some example embodiments, the retrieval module 202 receives a request from client device 110 through the network 104 to begin the integration of raw data. The request may include a reference to one or more data sources, and an identifier corresponding to the raw data file (e.g., a file name). Responsive to receiving the request, and based on the identified data source and the identifier of the raw data, the file retrieval module 202 commences the integration of the raw data into the data integration pipeline 142. The file retrieval module 202 may be configured to retrieve raw data in specific file types, including raw JSON files, GZIP JSON, as well as .ZIP files from a database from among the databases 126.

The file retrieval module 202 obtains the raw data from one or more data sources, and delivers the raw data to the ingest module 204. At operation 410, the ingest module 204 receives and parses the raw data into a data structure comprising one or more object fragments, such that the object fragments are defined as pieces of a source data object. An object fragment is an arbitrarily small or large piece of data that is identified by a unique key (e.g., assigned to the object fragment by the data integration pipeline 110), and additionally containing any amount of additional structured and unstructured data. A number of objects can be combined to form semantic objects later in the data pipeline.

Having parsed the data, the ingest module 204 differences the object fragments against an object database. By differencing the object fragments and the object database, a difference is determined. As explained above with reference to FIG. 2, the difference therefore represents "new" data to the object database, or data that should be modified, deleted, or have security controls changed. The ingest module 204 then stores the differences (e.g., a remaining plurality of object fragments) within an object fragment table. In some example embodiments, the ingest module 204 stores the differences by collating changes in a topologically ordered way and then storing them in a dense uniquely identified format (e.g., hashing).

At operation 415 the import module 206 retrieves the one or more object fragments in the object fragment table to resolve them together into their corresponding source data objects, and store them within the object database. Because the object fragments define corresponding source data objects, in resolving the plurality of object fragments into the object database, the import module 206 is reconstructing the source data objects based on their corresponding object fragments.

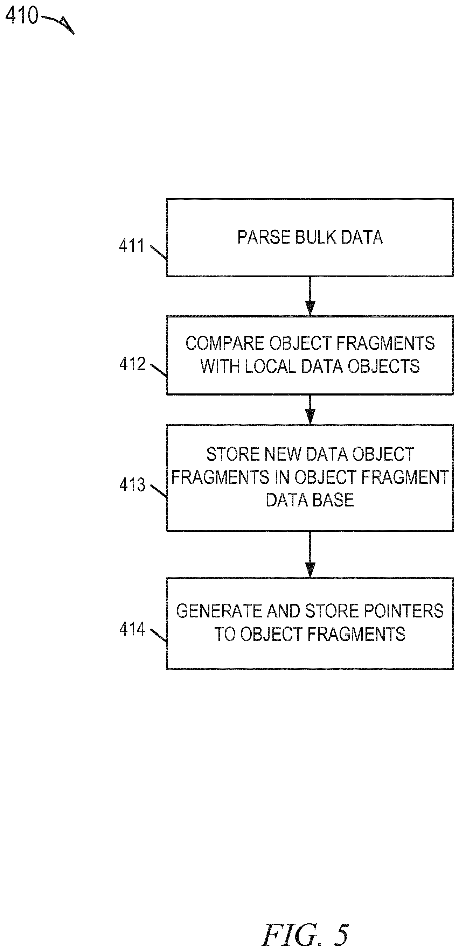

FIG. 5 is a flowchart illustrating operations of the data integration pipeline 142 in performing operation 410 of FIG. 4, which is performed to ingest raw data into the data integration pipeline during an ingest phase of data integration. Operations may be performed by the modules described above with respect to FIG. 2.

At operation 411, after the file retrieval module 202 retrieves the raw data (e.g., comprising one or more data objects, raw JSON files, etc.) from a data source (e.g., third party server 130, databases 126), the ingest module 204 parses the raw data into a plurality of object fragments.

At operation 412, having parsed the raw data into a plurality of object fragments, the ingest module 204 compares the plurality of fragments with an object database in order to calculate a difference. The difference therefore represents new data and comprises a remaining plurality of object fragments. If no difference is calculated (e.g., because the plurality of object fragments are duplicative), then the ingest module 204 clears the duplicative data, and moves on. At operation 413, having calculated the difference, the ingest module 204 stores the difference in an object fragment table.

At operation 414, having stored the plurality of object fragments within the object fragment table, the ingest module 204 generates and stores object pointers identifying a location of the plurality of object fragments (e.g., the difference) stored within the object fragment table. As detailed above, a pointer is a kind of reference, where the pointer's value determines a memory address. Pointers can be considered a piece of data that allows unique retrieval of another piece of data. In some example embodiments, the pointer is distinct from the object fragments themselves, and may be implemented as an offset (e.g., difference) between a datum's address and some fixed base address, as an index into an array, or a network address. The ingest module 204 stores the object pointers within a pointer table. Thus, the pointer table is represented as an area of memory that is filled with the memory addresses of other specific areas of memory.

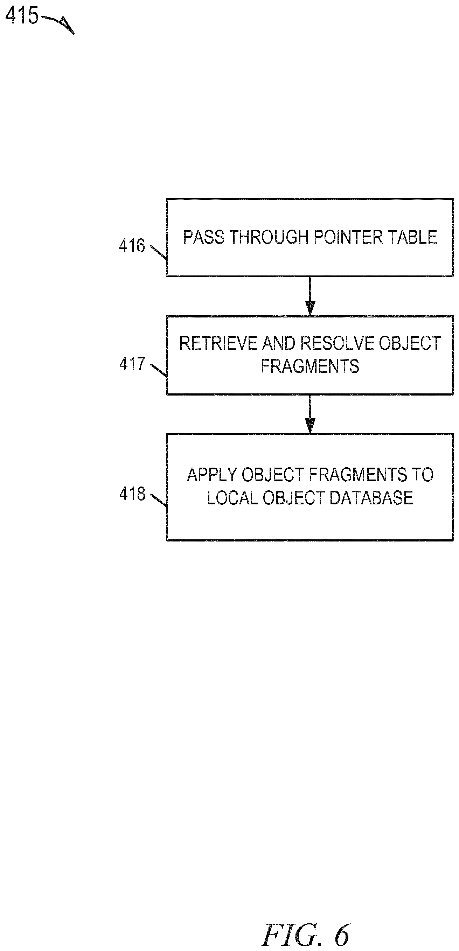

FIG. 6 is a flowchart illustrating operations of the data integration pipeline 142 in performing operation 415 of FIG. 4, which is performed to import the ingested raw data into the data processing system during an import phase of data integration. Operations may be performed by the modules described above with respect to FIG. 2

At operation 416, the import module 206 passes through the pointer table to dereference the object pointers, and thereby retrieve location information (e.g., memory addresses) of each of the one or more object fragments to be imported.

At operation 417, the import module 206 retrieves the plurality of object fragments from the object fragment table based on the dereferenced object pointers, and resolves the plurality of object fragments into their corresponding source data objects.

Lastly, at operation 418, the import module 206 applies resolved source data objects into the object database. The import module 206 applies the differences calculated by the ingest module 204 to the object database.

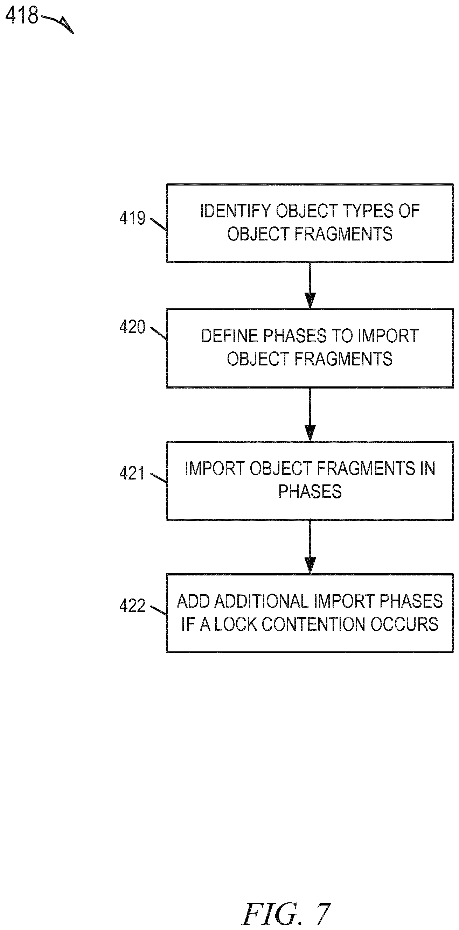

FIG. 7 is a flowchart illustrating operations of the data integration pipeline 142 in performing operation 418 of FIG. 5, for optimizing the import of the ingested object fragments to the local object database during the import phase. Operations may be performed by the modules described above with respect to FIG. 2. The data integration pipeline 142 is configured to resolve and integrate the object fragments into the object database in phases based on object type (e.g., ACLs, data sources, media values, or link set fragments). For example, at operation 419, the import module 206 identifies an object type corresponding to each of the plurality of object fragments based on a corresponding object identifier.

Having identified the object types of the one or more object fragments, at operation 420, the import module 206 may then define a sequence of phases to import the object fragments based on their corresponding object type (e.g., ACLs, data sources, media values, or link set fragments). The sequence of the import phases may be based on performance optimization factors, such as a capacity of the servers, a time of day which the import is to occur to avoid server traffic, and task priorities associated with the object fragments, which may be defined by a user. For example, the import module 206 may define a sequence of phases based on the size and type of objects included in the raw data and a current traffic level of the server to optimize the import and integration speed. As stated above, the import module 206 may also take into consideration the time of day, as server traffic may be highest at certain times of day, as well as task priorities set by users. At operation 421, after having defined one or more import phases to import the one or more data objects, the import module 206 imports the plurality of object fragments in the defined sequence of import phases.

At operation 422, additional import phases are added by the import module 206 if a lock contention occurs, causing an object fragment to be skipped over. Lock contention occurs whenever one process or thread (e.g., the importing of an object fragment among the set of object fragments) attempts to acquire a lock held by another process or thread, where a lock is designed to enforce a mutual exclusion concurrency control policy. For example, subsequent to importing a set of objects fragments, the import module 206 may pass through the object fragment table to determine if any object fragments have been skipped over. Upon identifying an object fragment that was not imported, the import module 206 adds an additional import phase in which to import the remaining object fragment.

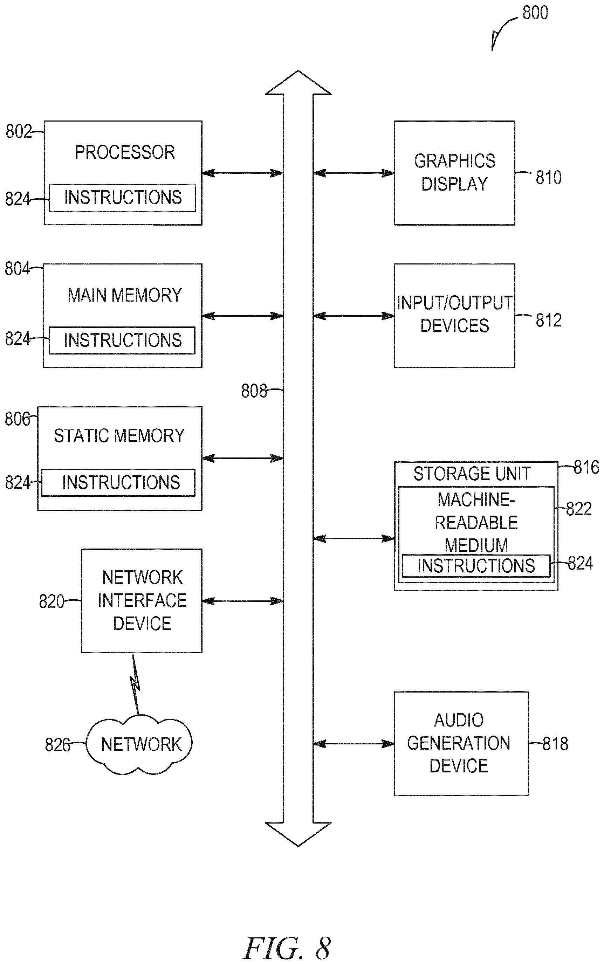

FIG. 8 is a block diagram illustrating components of a machine 800, according to some example embodiments, able to read instructions 824 from a machine-readable medium 822 (e.g., a non-transitory machine-readable medium, a machine-readable storage medium, a computer-readable storage medium, or any suitable combination thereof) and perform any one or more of the methodologies discussed herein, in whole or in part. Specifically, FIG. 8 shows the machine 800 in the example form of a computer system (e.g., a computer) within which the instructions 824 (e.g., software, a program, an application, an applet, an app, or other executable code) for causing the machine 800 to perform any one or more of the methodologies discussed herein may be executed, in whole or in part.

In alternative embodiments, the machine 800 operates as a standalone device or may be communicatively coupled (e.g., networked) to other machines. In a networked deployment, the machine 800 may operate in the capacity of a server machine or a client machine in a server-client network environment, or as a peer machine in a distributed (e.g., peer-to-peer) network environment. The machine 800 may be a server computer, a client computer, a PC, a tablet computer, a laptop computer, a netbook, a cellular telephone, a smartphone, a set-top box (STB), a personal digital assistant (PDA), a web appliance, a network router, a network switch, a network bridge, or any machine capable of executing the instructions 824, sequentially or otherwise, that specify actions to be taken by that machine. Further, while only a single machine is illustrated, the term "machine" shall also be taken to include any collection of machines that individually or jointly execute the instructions 824 to perform all or part of any one or more of the methodologies discussed herein.

The machine 800 includes a processor 802 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 804, and a static memory 806, which are configured to communicate with each other via a bus 808. The processor 802 may contain solid-state digital microcircuits (e.g., electronic, optical, or both) that are configurable, temporarily or permanently, by some or all of the instructions 824 such that the processor 802 is configurable to perform any one or more of the methodologies described herein, in whole or in part. For example, a set of one or more microcircuits of the processor 802 may be configurable to execute one or more modules (e.g., software modules) described herein. In some example embodiments, the processor 802 is a multicore CPU (e.g., a dual-core CPU, a quad-core CPU, or a 128-core CPU) within which each of multiple cores is a separate processor that is able to perform any one or more of the methodologies discussed herein, in whole or in part. Although the beneficial effects described herein may be provided by the machine 800 with at least the processor 802, these same effects may be provided by a different kind of machine that contains no processors (e.g., a purely mechanical system, a purely hydraulic system, or a hybrid mechanical-hydraulic system), if such a processor-less machine is configured to perform one or more of the methodologies described herein.

The machine 800 may further include a graphics display 810 (e.g., a plasma display panel (PDP), a light emitting diode (LED) display, a liquid crystal display (LCD), a projector, a cathode ray tube (CRT), or any other display capable of displaying graphics or video). The machine 800 may also include an input/output device 812 (e.g., a keyboard or keypad, a mouse, or a trackpad), a storage unit 816, an audio generation device 818 (e.g., a sound card, an amplifier, a speaker, a headphone jack, or any suitable combination thereof), and a network interface device 820.

The storage unit 816 includes the machine-readable medium 822 (e.g., a tangible and non-transitory machine-readable storage medium) on which are stored the instructions 824 embodying any one or more of the methodologies or functions described herein. The instructions 824 may also reside, completely or at least partially, within the main memory 804, within the processor 802 (e.g., within the processor's cache memory), within the static memory 806, or all three, before or during execution thereof by the machine 800. Accordingly, the main memory 804 and the processor 802 may be considered machine-readable media (e.g., tangible and non-transitory machine-readable media). The instructions 824 may be transmitted or received over a network 826 via the network interface device 820. For example, the network interface device 820 may communicate the instructions 824 using any one or more transfer protocols (e.g., hypertext transfer protocol (HTTP)).

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 822 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing the instructions 824 for execution by the machine 800, such that the instructions 824, when executed by one or more processors of the machine 800 (e.g., processor 802), cause the machine 800 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible and non-transitory data repositories (e.g., data volumes) in the example form of a solid-state memory chip, an optical disc, a magnetic disc, or any suitable combination thereof. A "non-transitory" machine-readable medium, as used herein, specifically does not include propagating signals per se. In some example embodiments, the instructions 824 for execution by the machine 800 may be communicated by a carrier medium. Examples of such a carrier medium include a storage medium (e.g., a non-transitory machine-readable storage medium, such as a solid-state memory, being physically moved from one place to another place) and a transient medium (e.g., a propagating signal that communicates the instructions 824).

Certain embodiments are described herein as including logic or a number of components, modules, or mechanisms. Modules may constitute software modules (e.g., code stored or otherwise embodied on a machine-readable medium or in a transmission medium), hardware modules, or any suitable combination thereof. A "hardware module" is a tangible (e.g., non-transitory) unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a CPU or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, and such a tangible entity may be physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a CPU configured by software to become a special-purpose processor, the CPU may be configured as respectively different special-purpose processors (e.g., each included in a different hardware module) at different times. Software (e.g., a software module) may accordingly configure one or more processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. Accordingly, the operations described herein may be at least partially processor-implemented, since a processor is an example of hardware. For example, at least some operations of any method may be performed by one or more processor-implemented modules. As used herein, "processor-implemented module" refers to a hardware module in which the hardware includes one or more processors. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

The performance of certain operations may be distributed among the one or more processors, whether residing only within a single machine or deployed across a number of machines. In some example embodiments, the one or more processors or hardware modules (e.g., processor-implemented modules) may be located in a single geographic location (e.g., within a home environment, an office environment, or a server farm). In other example embodiments, the one or more processors or hardware modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

## Claims

1. A computer implemented method, performed using one or more processors, comprising:
retrieving (405) a data file;
parsing (411) the data file into a plurality of object fragments;
differencing (412) the plurality of object fragments against one or more objects in an object database to determine differences;
storing (413) the differences; and
retrieving (417) the differences;
**characterized in that**:
the differences are stored in, and retrieved from, an object fragment table, and **in that** the method further comprises:
applying (418) the differences to the object database by:
identifying object types of each of the plurality of object fragments;
defining one or more import phases determining an order to retrieve the plurality of object fragments, the one or more import phases based on the object types;
retrieving the plurality of object fragments based on the one or more import phases; and
importing the retrieved object fragments into the object database in the defined sequence of import phases.

2. The computer implemented method of claim 1, further comprising:
generating object pointers corresponding to the differences in the object fragment table, the object pointers identifying a location of the differences within the object fragment table;
storing the object pointers within a pointer table;
accessing the pointer table to retrieve the object pointers; and
retrieving the differences based on the location identified by the object pointers.

3. The computer implemented method of claim 1, further comprising:
defining a sequence of phases to retrieve the differences based on optimization factors, wherein the optimization factors include a time of day, a capacity of a server, and a task priority; and
retrieving the differences based on the sequence of phases.

4. The computer implemented method of claim 1, further comprising:
defining a sequence of phases to retrieve the differences based on an object type of the object fragments;
retrieving the object fragments in the defined sequence of phases; and
adding an additional phase at the occurrence of a lock contention.

5. The computer implemented method of claim 1, wherein the differences are a first set of differences, and wherein applying the first set of differences to the object database further comprises:
differencing the first set of differences against the one or more objects in the object database, to determine a second set of difference; and
storing the second set of difference in the object database.

6. The computer implemented method of claim 1, wherein combining the plurality of object fragments and the differences results in the one or more objects within the object database.

7. The computer implemented method of claim 1, wherein the one or more object fragments include a corresponding object definition, an access control list, a media value, and a link set fragment.

8. The computer implemented method of claim 1, wherein the data file includes a raw JSON file, a GZIP JZON file, and a ZIP file.

9. A non-transitory machine-readable storage medium comprising instructions that, when executed by one or more processors of a machine, cause the machine to perform the method of any preceding claim.

10. A system comprising:
a file retrieval module (202) comprising one or more processors and configured to retrieve data;
an ingest module (204) comprising one or more processors and configured to parse the data into a plurality of object fragments;
the ingest module further configured to store the one or more object fragments; and
an import module (206) comprising one or more processors and configured to retrieve the one or more object fragments;
**characterized in that**:
the ingest module is configured to store the one or more object fragments in an object fragment table, and
the import module is further configured to apply the one or more object fragments to a local object database, by:
identifying object types of each of the plurality of object fragments;
defining one or more import phases determining an order to retrieve the plurality of object fragments, the one or more import phases based on the object types;
retrieving the plurality of object fragments based on the one or more import phases; and
importing the retrieved object fragments into the object database in the defined sequence of import phases.

11. The system of claim 10, wherein the ingest module is further configured to:
generate object pointers corresponding to each of the object fragments among the plurality of object fragments in the object fragment table, the object pointers defining locations of each of the object fragments within the object fragment table; and
store the object pointers in a pointer table.

12. The system of claim 11, wherein the import module is further configured to:
access the pointer table to retrieve the object pointers; and
retrieve the object fragments based on the locations defined by the object pointers.

## Patentansprüche

1. Computerimplementiertes Verfahren, das unter Verwendung von einem oder mehreren Prozessoren durchgeführt wird, umfassend:
Abrufen (405) einer Datendatei;
Parsen (411) der Datendatei in eine Vielzahl von Objektfragmenten;
Differenzieren (412) der Vielzahl von Objektfragmenten gegen ein oder mehrere Objekte in einer Objektdatenbank, um Unterschiede zu bestimmen;
Speichern (413) der Unterschiede; und
Abrufen (417) der Unterschiede;
**dadurch gekennzeichnet, dass**:
die Unterschiede in einer Objektfragmenttabelle gespeichert sind und aus dieser abgerufen werden, und dass das Verfahren ferner Folgendes umfasst:
Anwenden (418) der Unterschiede auf die Objektdatenbank durch:
Identifizieren von Objekttypen von jedem aus der Vielzahl von Objektfragmenten;
Definieren von einer oder mehreren Importphasen, die eine Reihenfolge zum Abrufen der Vielzahl von Objektfragmenten bestimmen, wobei die eine oder die mehreren Importphasen auf den Objekttypen basieren;
Abrufen der Vielzahl von Objektfragmenten basierend auf der einen oder den mehreren Importphasen; und
Importieren der abgerufenen Objektfragmente in die Objektdatenbank in der definierten Sequenz von Importphasen.

2. Computerimplementiertes Verfahren nach Anspruch 1, ferner umfassend:
Erzeugen von Objektzeigern, die den Unterschieden in der Objektfragmenttabelle entsprechen, wobei die Objektzeiger eine Stelle der Unterschiede innerhalb der Obj ektfragmenttabelle identifizieren;
Speichern der Objektzeiger innerhalb einer Zeigertabelle;
Zugreifen auf die Zeigertabelle, um die Objektzeiger abzurufen; und
Abrufen der Unterschiede basierend auf der Stelle, die durch die Objektzeiger identifiziert wird.

3. Computerimplementiertes Verfahren nach Anspruch 1, ferner umfassend:
Definieren einer Sequenz von Phasen, um die Unterschiede basierend auf Optimierungsfaktoren abzurufen, wobei die Optimierungsfaktoren eine Tageszeit, eine Kapazität eines Servers und eine Aufgabenpriorität beinhalten; und
Abrufen der Unterschiede basierend auf der Sequenz von Phasen.

4. Computerimplementiertes Verfahren nach Anspruch 1, ferner umfassend:
Definieren einer Sequenz von Phasen, um die Unterschiede basierend auf einem Objekttyp der Objektfragmente abzurufen;
Abrufen der Objektfragmente in der definierten Sequenz von Phasen; und
Hinzufügen einer zusätzlichen Phase beim Auftreten eines Sperrkonflikts.

5. Computerimplementiertes Verfahren nach Anspruch 1, wobei die Unterschiede ein erster Satz von Unterschieden sind und wobei das Anwenden des ersten Satzes von Unterschieden auf die Objektdatenbank ferner Folgendes umfasst:
Differenzieren des ersten Satzes von Unterschieden gegen den einen oder die mehreren Objekte in der Objektdatenbank, um einen zweiten Satz von Unterschieden zu bestimmen; und
Speichern des zweiten Satzes von Unterschieden in der Objektdatenbank.

6. Computerimplementiertes Verfahren nach Anspruch 1, wobei das Kombinieren der Vielzahl von Objektfragmenten und der Unterschiede zu dem einen oder den mehreren Objekten innerhalb der Objektdatenbank führt.

7. Computerimplementiertes Verfahren nach Anspruch 1, wobei das eine oder die mehreren Objektfragmente eine entsprechende Objektdefinition, eine Zugriffssteuerliste, einen Medienwert und ein Linksatzfragment beinhalten.

8. Computerimplementiertes Verfahren nach Anspruch 1, wobei die Datendatei eine JSON-Rohdatei, eine GZIP-JZON-Datei und eine ZIP-Datei beinhaltet.

9. Nichtflüchtiges maschinenlesbares Speichermedium, das Anweisungen umfasst, die, wenn sie von einem oder mehreren Prozessoren einer Maschine ausgeführt werden, die Maschine veranlassen, das Verfahren nach einem vorhergehenden Anspruch durchzuführen.

10. System, umfassend:
ein Dateiabrufmodul (202), das einen oder mehrere Prozessoren umfasst und konfiguriert ist, um Daten abzurufen;
ein Aufnahmemodul (204), das einen oder mehrere Prozessoren umfasst und konfiguriert ist, um die Daten in eine Vielzahl von Objektfragmenten zu parsen;
wobei das Aufnahmemodul ferner konfiguriert ist, um das eine oder die mehreren Objektfragmente zu speichern; und
ein Importmodul (206), das einen oder mehrere Prozessoren umfasst und konfiguriert ist, um das eine oder die mehreren Objektfragmente abzurufen;
**dadurch gekennzeichnet, dass**:
das Aufnahmemodul konfiguriert ist, um das eine oder die mehreren Objektfragmente in einer Objektfragmenttabelle zu speichern, und
das Importmodul ferner konfiguriert ist, um das eine oder die mehreren Objektfragmente durch Folgendes auf eine lokale Objektdatenbank anzuwenden:
Identifizieren von Objekttypen von jedem aus der Vielzahl von Objektfragmenten;
Definieren von einer oder mehreren Importphasen, die eine Reihenfolge zum Abrufen der Vielzahl von Objektfragmenten bestimmen, wobei die eine oder die mehreren Importphasen auf den Objekttypen basieren;
Abrufen der Vielzahl von Objektfragmenten basierend auf der einen oder den mehreren Importphasen; und
Importieren der abgerufenen Objektfragmente in die Objektdatenbank in der definierten Sequenz von Importphasen.

11. System nach Anspruch 10, wobei das Aufnahmemodul ferner für Folgendes konfiguriert ist:
Erzeugen von Objektzeigern, die jedem der Objektfragmente aus der Vielzahl von Objektfragmenten in der Objektfragmenttabelle entsprechen, wobei die Objektzeiger Stellen von jedem der Objektfragmente innerhalb der Objektfragmenttabelle definieren; und
Speichern der Objektzeiger in einer Zeigertabelle.

12. System nach Anspruch 11, wobei das Aufnahmemodul ferner für Folgendes konfiguriert ist:
Zugreifen auf die Zeigertabelle, um die Objektzeiger abzurufen; und
Abrufen der Objektfragmente basierend auf den Stellen, die durch die Objektzeiger definiert sind.

## Revendications

1. Procédé mis en œuvre par ordinateur, exécuté à l'aide d'un ou plusieurs processeurs, comprenant :
la récupération (405) d'un fichier de données ;
l'analyse (411) du fichier de données en une pluralité de fragments d'objets ;
la différenciation (412) de la pluralité de fragments d'objets par rapport à un ou plusieurs objets dans une base de données d'objets pour déterminer des différences ;
le stockage (413) des différences ; et
la récupération (417) des différences ;
**caractérisé en ce que** :
les différences sont stockées dans, et récupérées depuis, une table de fragments d'objets, et **en ce que** le procédé comprend en outre :
l'application (418) des différences à la base de données d'objets par :
identification des types d'objets de chacun de la pluralité de fragments d'objets ;
définition d'une ou plusieurs phases d'importation déterminant un ordre pour récupérer la pluralité de fragments d'objets, l'une ou plusieurs phases d'importation étant basées sur les types d'objets ;
récupération de la pluralité de fragments d'objet sur la base de l'une ou plusieurs phases d'importation ; et
importation des fragments d'objet récupérés dans la base de données d'objets dans la séquence définie de phases d'importation.

2. Procédé mis en œuvre par ordinateur selon la revendication 1, comprenant en outre :
la génération de pointeurs d'objet correspondant aux différences dans la table de fragments d'objet, les pointeurs d'objets identifiant un emplacement des différences dans la table de fragments d'objets ;
le stockage des pointeurs d'objets dans une table de pointeurs ;
l'accès à la table de pointeurs pour récupérer les pointeurs d'objets ; et
la récupération des différences sur la base de l'emplacement identifié par les pointeurs d'objet.

3. Procédé mis en œuvre par ordinateur selon la revendication 1, comprenant en outre :
la définition d'une séquence de phases pour récupérer les différences sur la base de facteurs d'optimisation, dans lequel les facteurs d'optimisation comprennent une heure du jour, une capacité d'un serveur et une priorité de tâche ; et
la récupération des différences dur la base de la séquence de phases.

4. Procédé mis en œuvre par ordinateur selon la revendication 1, comprenant en outre :
la définition d'une séquence de phases pour récupérer les différences sur la base d'un type d'objet des fragments d'objet ;
la récupération des fragments d'objet dans la séquence de phases définie ; et
l'ajout d'une phase supplémentaire lors de l'apparition d'un conflit de verrouillage.

5. Procédé mis en œuvre par ordinateur selon la revendication 1, dans lequel les différences sont un premier ensemble de différences, et dans lequel l'application du premier ensemble de différences à la base de données d'objets comprend en outre :
la différenciation du premier ensemble de différences par rapport à l'un ou plusieurs objets dans la base de données d'objets, pour déterminer un deuxième ensemble de différences ; et
le stockage du deuxième ensemble de différence dans la base de données d'objets.

6. Procédé mis en œuvre par ordinateur selon la revendication 1, dans lequel la combinaison de la pluralité de fragments d'objets et des différences résulte en l'un ou plusieurs objets dans la base de données d'objets.

7. Procédé mis en œuvre par ordinateur selon la revendication 1, dans lequel l'un ou plusieurs fragments d'objet comprennent une définition d'objet correspondante, une liste de contrôle d'accès, une valeur de supports et un fragment d'ensemble de liens.

8. Procédé mis en œuvre par ordinateur selon la revendication 1, dans lequel le fichier de données comprend un fichier JSON brut, un fichier GZIP JZON et un fichier ZIP.

9. Support de stockage lisible par machine non transitoire comprenant des instructions qui, lorsqu'elles sont exécutées par un ou plusieurs processeurs d'une machine, amènent la machine à exécuter le procédé de l'une quelconque des revendications précédentes.

10. Système comprenant :
un module de récupération de fichiers (202) comprenant un ou plusieurs processeurs et configuré pour récupérer des données ;
un module d'ingestion (204) comprenant un ou plusieurs processeurs et configuré pour analyser les données en une pluralité de fragments d'objet ;
le module d'ingestion configuré en outre pour stocker l'un ou plusieurs fragments d'objet ; et
un module d'importation (206) comprenant un ou plusieurs processeurs et configuré pour récupérer l'un ou plusieurs fragments d'objet ;
**caractérisé en ce que** :
le module d'acquisition est configuré pour stocker l'un ou plusieurs fragments d'objet dans une table de fragments d'objet, et
le module d'importation est en outre configuré pour appliquer l'un ou plusieurs fragments d'objet à une base de données d'objets locale, par :
identification des types d'objets de chacun de la pluralité de fragments d'objets ;
définition d'une ou plusieurs phases d'importation déterminant un ordre pour récupérer la pluralité de fragments d'objets, l'une ou plusieurs phases d'importation étant basées sur les types d'objets ;
récupération de la pluralité de fragments d'objet sur la base de l'une ou plusieurs phases d'importation ; et
importation des fragments d'objet récupérés dans la base de données d'objets dans la séquence définie de phases d'importation.

11. Système selon la revendication 10, dans lequel le module d'ingestion est en outre configuré pour :
générer des pointeurs d'objets correspondant à chacun des fragments d'objets parmi la pluralité de fragments d'objets dans la table de fragments d'objets, les pointeurs d'objets définissant des emplacements de chacun des fragments d'objets dans la table de fragments d'objets ; et
stocker des pointeurs d'objets dans une table de pointeurs.

12. Système selon la revendication 11, dans lequel le module d'importation est en outre configuré pour :
accéder à la table de pointeurs pour récupérer les pointeurs d'objets ; et
récupérer les fragments d'objet sur la base des emplacements définis par les pointeurs d'objet.
